Europäisches Patentamt

(19) European Patent Office

Office européen des brevets

(11) Publication number: **0 034 187**
**B1**

(12) **EUROPEAN PATENT SPECIFICATION**

(45) Date of publication of patent specification: **04.07.84**

(51) Int. Cl.³: **H 04 N 1/41**, G 06 K 9/20, H 04 B 12/04, H 04 L 25/16

(21) Application number: **80901533.2**

(22) Date of filing: **15.08.80**

(86) International application number: **PCT/JP80/00185**

(87) International publication number: **WO 81/00659 05.03.81 Gazette 81/6**

(54) **COMPRESSED DATA RESTORING SYSTEM.**

(30) Priority: **17.08.79 JP 104635/79**

(43) Date of publication of application: **26.08.81 Bulletin 81/34**

(45) Publication of the grant of the patent: **04.07.84 Bulletin 84/27**

(84) Designated Contracting States: **DE FR GB**

(56) References cited:
JP - A - 52 075 111
JP - A - 54 044 418
JP - A - 55 038 729
JP - A - 55 046 676
US - A - 4 040 093

(73) Proprietor: **FUJITSU LIMITED**
**1015, Kamikodanaka Nakahara-ku**
**Kawasaki-shi Kanagawa 211 (JP)**

(72) Inventor: **YOSHIDA, Shigeru**
**2-6-39, Kamishinjo Nakahara-ku, Kawasaki-shi**
**Kanagawa 211 (JP)**
Inventor: **KOSEKI, Minoru**
**1-59, Akayama-cho**
**Koshigaya-shi Saitama 343 (JP)**
Inventor: **HORIE, Masakatsu**
**2-9-2, Ohji Atsugi-shi**
**Kanagawa 243 (JP)**

(74) Representative: **Rackham, Stephen Neil et al,**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a system for decoding or restoring compressed data. The system of the present invention is used for decoding or restoring compressed data in facsimile data transmission.

In general, the technique of data compression has been used for speeding up facsimile data transmission.

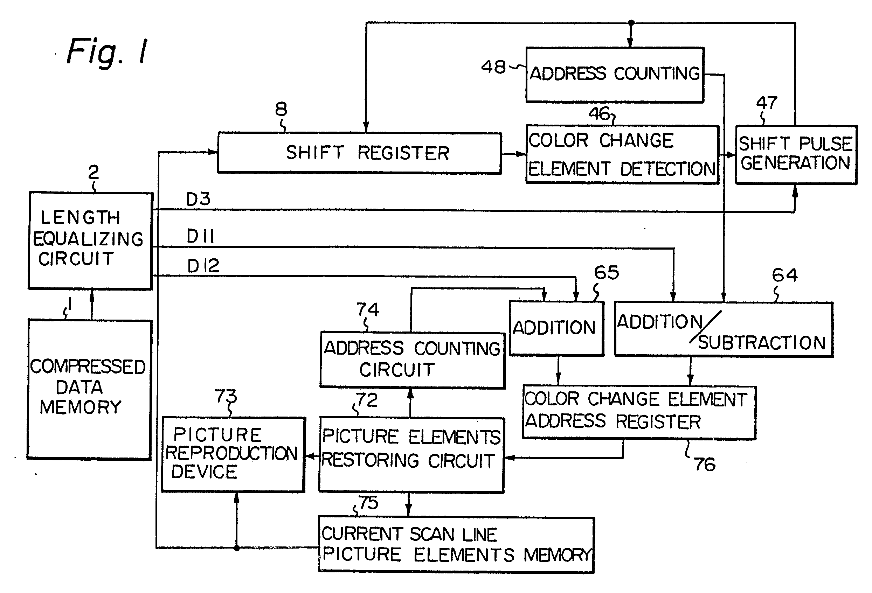

A prior art technique of coding and decoding compressed data using the correlationship in the data of adjacent scan lines is illustrated in Figures 1 and 2A to 2E. The prior system shown in Figure 1 comprises a memory 1 for the compressed data, a circuit 2 for equalising the bit lengths of codes and a shift register 8 for the preceding scan line; a circuit 46 for detecting colour change elements, a circuit 47 for generating shift pulses and a circuit 48 for counting addresses on the preceding scan line; a circuit 64 for addition/subtraction and a circuit 65 for addition; a memory 76 for the address of a particular colour change element, a circuit 72 for restoring the picture elements for a current scan line, a circuit 74 for counting addresses on the current scan line, a device 73 for reproducing the picture, and a memory 75 for a current scan line. The circuit 2 for equalising the bit lengths of codes produces data D3 relating to the selection of the reference correlated colour change element, data D11 relating to the relative distance between the reference correlated colour change element and the particular colour change element, and data D12 relating to the distance between the last preceding colour change element and the particular colour change element.

The procedures which are carried out by the system shown in Figure 1 will be explained with reference to patterns illustrated in Figures 2A to 2E in which the pictures along the current scan line (a) and the preceding scan line (b) are illustrated. Line scannings are carried out horizontally from the left to the right side, while line-by-line scannings are carried out vertically from the top to the bottom. Hatched picture elements represent black elements, while non-hatched picture elements represent white elements. $P_1$, $P_2$, $P_3$, $P_x$ and Q are the colour change elements. Colour changes from white to black at $P_1$, $P_2$, $P_3$ and Q, and changes from black to white at $P_x$. The nature of these colour change elements are as follows.

(1) Q is the particular colour change element on the current scan line.

(2) $P_x$ is the last preceding colour change element on the current scan line with respect to Q.

(3) $P_1$ is a colour change element of the same type on the preceding scan line, for example, the colour changes from white to black both at Q and $P_1$.

(4) $P_2$ is the next colour change element on the preceding scan line the colour change of which is the same as that of $P_1$.

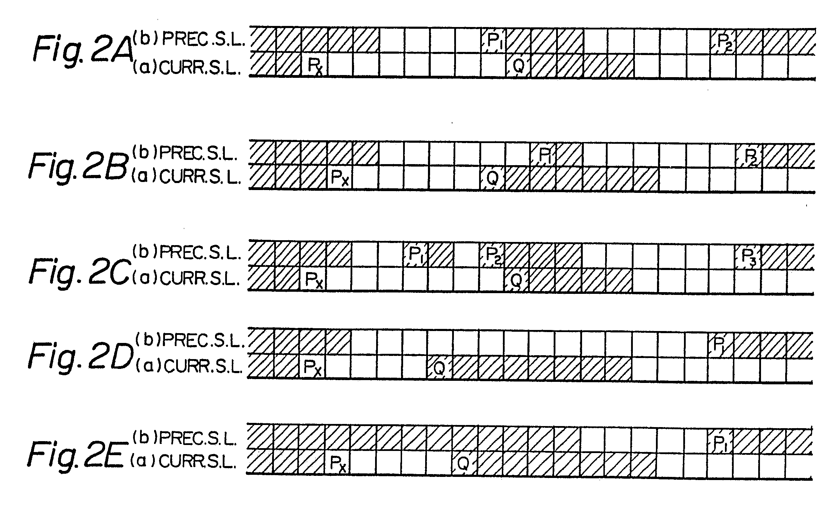

There are two kinds of colour change elements Q in Figures 2A to 2E. That is, the colour change elements Q in Figures 2A, 2B and 2C are "correlated" colour change elements, whilst the colour change elements Q in Figures 2D and 2E are "independent" colour change elements.

The difference between a correlated colour change element and an independent colour change element is as follows. If a run of picture elements in the preceding line, i.e. a continuous sequence of picture elements which have the same colour as the colour of the particular colour change element, overlaps the run of picture elements starting with the particular colour change element on the current scan line and does not overlap the preceding run of picture elements which have the same colour as the colour of the particular colour change element, such a particular colour change element is called a "correlated" colour change element. Whilst, if no run of picture elements on the preceding scan line which have the same colour as the colour of the particular colour change element on the current scan line overlap the run of picture elements on the current scan line starting with the particular colour change element, or if a run of picture elements on the preceding scan line, which has the same colour as the colour of the particular colour change element on the current scan line overlaps both the run of picture elements starting with the particular colour change element and the preceding run of picture elements which have the same colour as that of the particular colour change element on the current scan line, then such a colour change element is called an "independent" colour change element.

The address of a particular colour change element is determined by the address of a reference colour change element and the distance between the reference colour change element and the particular colour change element.

In the case of Figures 2A, 2B and 2C, the address data of the particular colour change elements Q are as follows:—

For Q shown in Figure 2A ... (1, +1)
For Q shown in Figure 2B ... (1, −2)
For Q shown in Figure 2C ... (2, +1)

The first numerals "1", "1" and "2" in the parentheses indicate that the reference colour change elements on the preceding scan line are $P_1$ (Figure 2A), $P_1$ (Figure 2B) and $P_2$ (Figure 2C), respectively. The second numerals "+1", "−2" and "+1" in the parentheses indicate that the displacement of the particular colour change element from the reference colour change element are one picture element to the right (Figure 2A), two picture elements to the left (Figure 2B), and one picture element to the right (Figure 2C), respectively.

In the case of Figures 2D and 2E, the address data of the particular colour change element Q are determined by the address of the reference colour change element $P_x$ and the distance between the reference colour change element $P_x$ and the particular colour change element Q. The adjacent preceding colour change element on the current scan line is selected as the reference colour change element for the independent colour change element Q as illustrated in Figures 2D and 2E. If no preceding colour change element exists on the current scan line, the first picture element on the current scan line is selected as the reference colour change element.

This prior technique of decoding compressed data on the basis of the patterns illustrated in Figures 2A to 2E is carried out by the prior system for decoding compressed data shown in Figure 1. The data of the preceding scan line stored in the shift register 8 are shifted by the shift pulses supplied from the circuit 47 for generating shift pulses. Addresses of colour change elements are counted by the circuit 48 for counting addresses on the preceding scan line, which circuit 48 receives signals from the circuit 47 for generating shift pulses which receives signals from the circuit 46 for detecting colour change elements. The data of a particular correlated colour change element is calculated in the circuit 64 for addition/subtraction. The circuit 64 receives the data from the circuit 48, and data D11 from the circuit 2 and stored in the register 76 for the address of the particular colour change element. The data of an independent colour change element is calculated in the circuit 65 for addition which receives the data from the circuit 74 for counting addresses on the current scan line, and the data D12 from the circuit 2 and stored in the register 76. The data stored in the register 76 is written into the circuit 72 for restoring the data of picture elements for a current scan line. The data of picture elements of the circuit 72 is supplied to and stored in the memory 75 for a current scan line. The data of picture elements stored in the memory 75 for a current scan line is transmitted to the shift register 8 as the data of the picture elements of the next preceding scan line.

However, in this prior system, a predetermined length of time is always required for shifting the data of all of the picture elements of a preceding scan line because the shift register 8 stores the data of all of the picture elements of a preceding scan line. Also, this prior system requires shift circuits and counter circuits for the shift register. Accordingly, a high speed decoding operation cannot be attained and the construction of the devices of the system is complicated.

The above described prior art system is disclosed in, for example, JP—A—52-58406 (and GB—A—1570501).

According to the present invention a system for decoding compressed data resulting from a line scanning operation is characterised by an address memory in which only the data of the decoded colour change elements are stored and which is capable of storing the position data of all of the colour change elements in at least two successive scan lines, the reference colour change element being selected from the decoded data of the colour change elements, addition/subtraction being carried out between the address of the reference colour change element and the relative distance between the reference colour change element and the particular colour change element so that the position data of the colour change element is obtained, and the obtained position data of the particular colour change element is written-in to the address memory.

A particular example of a system in accordance with this invention will now be described with reference to the accompanying drawings, in which

Figure 1 is a block diagram of a prior system for decoding compressed data;

Figures 2A to 2E illustrate patterns of the picture elements along the scan line to describe the operation of the prior system;

Figure 3 is a block diagram of a system for decoding compressed data in accordance with the present invention;

Figure 4 illustrates a pattern of the picture elements along the scan line to describe the operation of the present invention;

Figure 5 illustrates a pattern of the data stored in a memory of FIFO type used in the system; and

Figures 6 and 7 illustrate alternative embodiments of the address memory.

A system for decoding compressed data in accordance with an embodiment of the present invention is of relative address coding (RAC) type and comprises an address memory 3 of "first in first out" (FIFO) type. The system also comprises a multiplex circuit 41, flip-flop circuit 42, 43, a coincidence circuit 44 and an AND gate 45; a comparator 51 and registers 52, 53; an addition/subtraction circuit 63, an address reading-out circuit 61 and an address writing-in circuit 62; an address register 71, a picture elements restoring circuit 72, a picture reproduction device 73, an address counting circuit 74 and a current scan line picture elements memory 75. Reading-out of an address of a colour change element on the preceding scan line is effected by the address reading-out circuit 61, and writing-in of a colour change element on the current scan line is effected by the address writing-in circuit 62.

Compressed data stored in the memory 1 are supplied to the length equalizing circuit 2. In the circuit 2, the determination as to whether the colour change element in question is a correlated colour change element or an independent colour change element and the equalization of the length of the data of the distance between the reference colour change element and the colour change element in question are effected. In this equalization, the run length codes having different bits lengths are converted into the corresponding binary codes having the same bits length.

The circuit 2 produces the data D1 which represent the distance between the colour change element in question and the reference colour change element, the data D2 which represents the data of independent colour change elements and the data D3 which represents the data of correlated colour change elements. The data D2 and D3 are supplied to the flip-flop circuit 42 to change an output signal which indicates whether the colour change element in question is white or black. the data D1 is stored in the register 53. Also the data D2 and D3 are supplied to the multiplexer 41.

When the multiplexer 41 receives the data D2 from the circuit 2, the multiplexer 41 is switched to receive the data from the address register 71, while when the multiplexer 41 receives the data D3 from the circuit 2, the multiplexer 41 is switched to receive the data from the address memory 3 of FIFO type.

When the multiplexer 41 is switched to receive the data from the address register 71, the data of the address register 71 is supplied to and stored in the register 52 through the multiplexer 41. The stored data of the register 71 is cleared at the beginning of the operation and each time decodings of data of one scan line are completed. In the circuit 63 for addition/subtraction, addition/subtraction between the data of the registers 52 and 53 is effected. The result of such addition/subtraction, which represents the address of the colour change element on the current scan line, is supplied to and stored in the address register 71. The data of the register 71 are written in the address memory 3 of FIFO type under the control of the address writing-in circuit 62. Simultaneously the data of the register 71 are supplied to the writing-in circuit 72. The data of the picture elements restoring circuit 72 are written in the memory 75 for the data of picture elements of the current scan line, while the address counting circuit 74 counts the signal from the writing-in circuit 72. The writing-in of data of the memory 75 is continued until the content of the register 71 becomes equal to the content of the address counting circuit 74.

After the above described process, when the multiplexer 41 receives the data D3 from the circuit 2, the flip-flop circuit 42 changes its state and the address of the colour change element which has already been decoded is read-out from the address memory 3 of FIFO type. This address represents the distance between the start element of the scan line and the colour change element. This reading-out of the address of the colour change element is effected by a shift out signal SO supplied from the address reading-out circuit 61. This read-out address corresponds to the already decoded colour change element on the preceding scan line.

This read-out address is supplied to and stored in the register 52. The data D1 which represents the distance between the colour change point in question and the reference colour change element is supplied to and stored in the register 53. In the addition/subtraction circuit 63, addition/subtraction between the data of the registers 52 and 53 is effected under the condition that the AND gate 45 produces a signal "1".

The AND gate 45 produces a signal "1" under the following conditions. Firstly, as the result of the comparison by the comparator 51 in which the data of the register 71 which represents the address of the adjacent preceding colour change element and the data of the register 52 which represents the address of the colour change element on the preceding scan line are compared, it must be determined that the data of the register 52 is greater than the data of the register 71. Secondly, the coincidence between the output signal of the flip-flop circuit 42 which represents discrimination between black and white of the colour change element in question and the output signal of the flip-flop circuit 43 which represents discrimination between black and white of the colour change element on the preceding scan line must be detected by the coincidence circuit 44. If these first and second conditions are not realized, the address of the next colour change element on the preceding scan line is read out from the address memory 3 of FIFO type and is supplied to the register 52 where the check is again effected as to whether or not these first and second conditions are realized. Such checks are repeated until these first and second conditions are realized.

When these first and second conditions are realized, the AND gate 45 supplies an output signal "1" to the address reading-out circuit 61. Upon receipt of this signal "1" from the AND gate 45, the determination of the order of the colour change elements on the preceding scan line is effected in the address reading-out circuit 61 using the data D3 supplied from the circuit 2. If the order of a colour change element on the preceding scan line is determined as No. 1, addition/subtraction of the data of the register 52 and 53 is immediately effected in the addition/subtraction circuit 63. While, if the order of a colour change element on the preceding scan line is determined as one of Nos. 2, 3, ..., n, the shift out signal SO, the number of which is one of 2, 4, ... 2(n−1) corresponding to the above mentioned order Nos. 2, 3, ..., n, is supplied to the address memory 3 of FEFO type from the address reading-out circuit 61, so that the address of a colour change element the order of which is advanced by 2, 4, . . . , 2(n−1) from the first colour change element, corresponding to the above mentioned order Nos. 2, 3, . . . , n, is read out from the address memory 3 of FIFO type and is stored in the registered 52.

The result of addition/subtraction effected in the addition/subtraction circuit 63 is supplied to and stored in the address register 71. The data of the address register 71 is supplied to the picture elements restoring circuit 72 and the address memory 3 of FIFO type. Thus, the decoded address of the colour change element in question is written into the memory 3 of FIFO type.

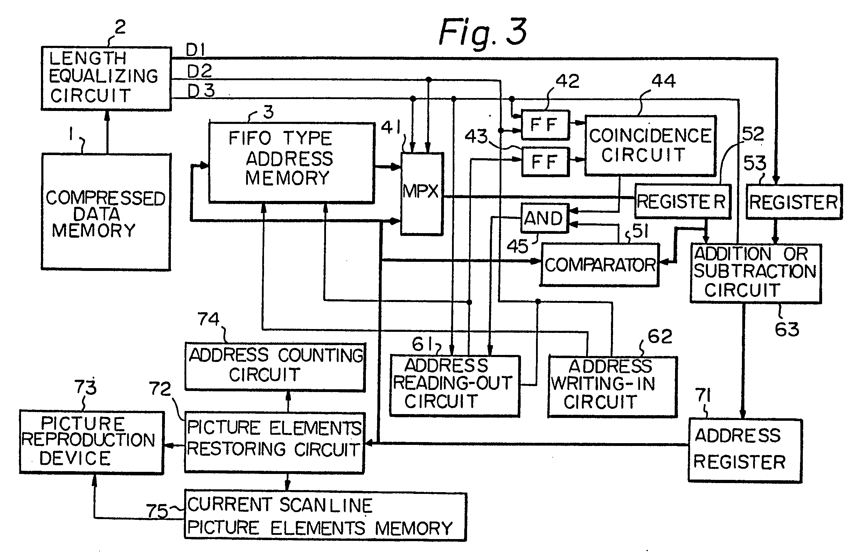

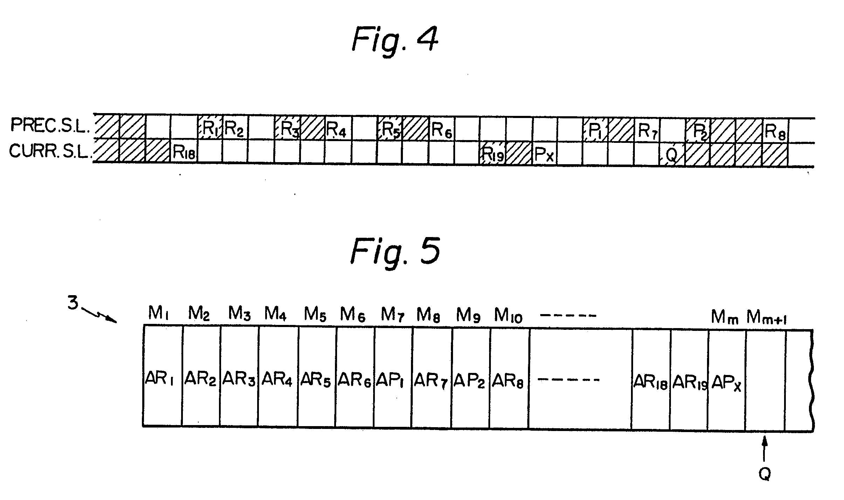

An example of the operation of the system of Figure 3 will now be described with reference to Figure 4 illustrating a pattern of the picture elements along the scan line and Figure 5 illustrating a pattern of the data stored in the address memory of FIFO type. Addresses $AR_1$, $AR_2$, . . . , $AR_6$, $AP_1$, $AR_7$, . . . , $AR_{19}$ and $AP_x$ of colour change elements $R_1$, $R_2$, . . . , $R_6$, $P_1$, $R_7$, . . . , $R_{19}$ and $P_x$ are stored in word sections $M_1$, $M_2$, . . . , $M_m$, respectively, of the address memory of FIFO type. At first, the comparison between the address $AR_1$ and the address $AP_x$ and the comparison between the colour data of the colour change elements Q in question and $R_1$ and effected. Although the colour (black) of the colour change element Q in question is the same as the colour of the colour change element $R_1$, the colour change elements $R_1$ and Q are located in a different direction regarding the adjacent preceding colour change element $P_x$, so that only the above mentioned second condition is realized and the above mentioned first condition is not realized at the colour change element $R_1$. Hence, the second step comparison between the addresses $AR_2$ and the address $AP_x$ and comparison between the colour data of the colour change elements Q in question and $R_2$ is effected. In this step neither of the above mentioned first and second conditions is realized. Thus, the comparison proceeds to the third step in which the comparison regarding the colour change element $R_3$ is effected. In this step, again, only the above mentioned second condition is realized and the above mentioned first condition is not realized. In such a manner, the comparison proceeds successively for the colour change elements $R_4$ and $R_5$ and so on until both of the above mentioned first and conditions are realized at the colour change element $P_1$.

As illustrated in Figure 4, both colour change elements $P_1$ and $P_2$ on the preceding scan line realize the above mentioned first and second conditions. However, only the colour change element $P_2$ should be selected as the reference colour change element for the colour change element Q in question. It should be noted that the information of this selection of the colour change element $P_2$ is stored in the memory 1. In accordance with this information, the selection of the colour change element $P_2$ as the reference colour change element is carried out. From the address $AP_2$ of the reference colour change element $P_2$ and the data of the distance between the element $P_2$ and the element Q, the address of the colour change element Q in question is obtained as a result of the addition "$AP_2+(−1)$". It should be noted that since the element Q is located to the left of the element $P_2$, the distance is expressed as a minus value "$−1$", and accordingly, the above mentioned addition is substantially the subtraction "$Ap_2−1$". The thus obtained address of the colour change element Q in question is caused to be stored in the word section $M_{m+1}$.

Although in the above described embodiment of the present invention, the system of relative address coding is used, other embodiments of the present invention in which the system of edge difference coding (EDIC) type or relative element address designating coding (READ) is used are possible.

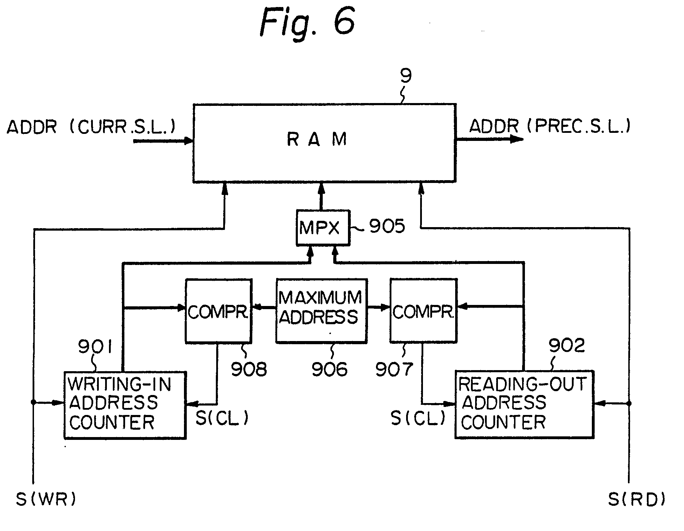

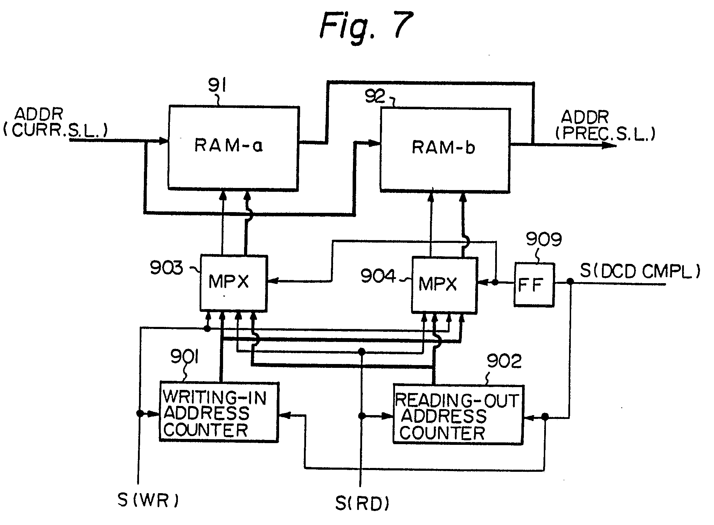

Also, although in the above described embodiment of the present invention, the address memory 3 of FIFO type is used, memories of other types, such as random access memories (RAM) can be used. Such random access memories are illustrated in Figures 6 and 7. The device of Figure 6 comprises a RAM 9, an address counter 901 for writing-in, an address counter 902 for reading-out, a multiplexer 905, a register 906 for a maximum address, and comparators 907 and 908. Addresses of colour change elements on the current scan line are written-in to the RAM 9 and addresses of colour change elements on the preceding scan line are read-out from the RAM 9. A writing-in signal S(WR) and a reading-out signal S(RD) are applied to the address counters 901 and 902, respectively. The signals S(WR) and S(RD) are also applied to the RAM 9. Clear signals S(CL) are applied to the address counters 901 and 902, respectively. When the data of the address counters 901 and 902 become greater than the data of a register 906 for the maximum address, the data of the address counters 901 and 902 are cleared by the clear signals S(CL) produced in the comparators 907 and 908. The device of Figure 7 comprises a RAM-a 91 and a RAM-b 92, an address counter 901 for writing-in, an address counter 902 for reading-out, multiplexers 903 and 904, and a flip-flop circuit 909. Addresses of colour change elements on the current scan line are written-in to the RAMs 91 and 92, and addresses of colour change elements on the preceding scan line are read-out from the RAMs 91 and 92. A writing-in signal S(WR) is applied to the address counter 901 and the multiplexers 903, 904. A reading-out signal S(RD) is applied to the address counter 902 and the multiplexers 903, every moment the decoding of one scan line is completed. The output signal of the flip-flop circuit 909 is applied to the multiplexers 903 and 904, so that the switching between the read/write operations of the RAMs 91 and 92 is carried out. In the devices of Figures 6 and 7, the reading-out of a data from the RAMs is carried out immediately after the writing-in of the data of the RAMs, without a delay which occurs in the device of Figure 3 due to the transmission between the input terminal and the output terminal of the address memory 3 of FIFO type. Accordingly, the speed of operation of the devices of Figure 6 or 7 can be increased over that of the device of Figure 3.

Table of reference numerals and parts

| Reference numeral | Part |
|---|---|
| 1 | Compressed Data Memory |
| 2 | Length Equalizing Circuit |
| 3 | FIFO type Address Memory |
| 41 | Multiplexer |
| 42, 43 | Flip-flop Circuit |
| 44 | Coincidence Circuit |
| 45 | AND Gate |
| 51 | Comparator |
| 52, 53 | Register |
| 61 | Address Reading-out Circuit |
| 62 | Address Writing-in Circuit |
| 63 | Addition or Subtraction Circuit |
| 71 | Address Register |
| 72 | Picture Elements Restoring Circuit |
| 73 | Picture Reproduction Device |
| 74 | Address Counting Circuit |
| 75 | Current Scan Line Picture Elements Memory |

## Claims

1. A system for decoding compressed data resulting from a line scanning operation in which the data of a particular colour change element (Q) of a current scan line consists firstly of the address of a reference colour change element (P) which is located either in a preceding scan line ($P_1$, $P_2$) or in said current scan line ($P_x$) and secondly of the relative distance between the particular colour change element (Q) and the reference colour change element, characterised in that the system comprises an address memory (3, 9) in which only the data of the decoded colour change elements are stored and which is capable of storing the position data of all of the colour change elements in at least two successive scan lines, the reference colour change element being selected from the decoded data of the colour change elements, addition/subtraction being carried out between the address of the reference colour change element and the relative distance between the reference colour change element (P) and the particular colour change element (Q) so that the position data of the colour change element (Q) is obtained, and the obtained position data of the particular colour change element (Q) is written-in to the address memory (3, 9).

2. A system according to claim 1, wherein the address memory is of FIFO type (3).

3. A system according to claim 1, wherein the address memory is of RAM type (9).

## Patentansprüche

1. System zum Decodieren komprimierter Daten, welche aus einem Zeilenabtastbetrieb resultieren, bei welchem die Daten eines bestimmten Farbwechselelementes (Q) einer gegenwärtigen Abtastzeile erstens aus der Adresse eines Referenz-Farbwechselelements (P), welches entweder in einer vorhergehenden Abtastzeile ($P_1$, $P_2$) oder in der genannten gegenwärtigen Abtastzeile ($P_x$) angeordnet ist, und zweitens aus dem relativen Abstand zwischen dem bestimmten Farbwechselelement (Q) und dem Referenz-Farbwechselelement bestehen, dadurch gekennzeichnet, daß das System einen Adressenspeicher (3, 9) umfaßt, in welchem nur die Daten der decodierten Farbwechselelemente gespeichert werden und welcher die Positionsdaten von allen Farbwechselelementen in wenigstens zwei aufeinander folgenden Abtastzeilen speichern kann, dass Referenz-Farbwechselelement von den decodierten Daten der Farbwechselelemente ausgewählt wird, Addition/Subtraktion zwischen der Adresse des Referenz-Farbwechselelements und dem relativen Abstand zwischen dem Referenz-Farbwechselelement (P) und dem bestimmten Farbwechselelement (Q) durchgeführt wird, so daß die Positionsdaten des Farbwechselelements (Q) erhalten werden, und die erhaltenen Positionsdaten des bestimmten Farbwechselelements (Q) in den Adressenspeicher (3, 9) eingeschrieben werden.

2. System nach Anspruch 1, dadurch gekennzeichnet, daß der Adressenspeicher vom FIFO-(first-in/first-out)-Typ ist.

3. System nach Anspruch 1, bei welchem der Adressenspeicher vom RAM-Typ (9) ist.

## Revendications

1. Système pour décoder des données comprimées issues d'une opération de balayage de lignes ou l'information concernant un élément de changement de couleur particulier (Q) d'une ligne en cours de balayage est constituée, premièrement, de l'adresse d'un élément de changement de couleur de référence (P) situé soit dans une ligne balayée précédemment ($P_1$, $P_2$) soit dans la ligne en cours de balayage ($P_x$), deuxièmement, de la distance relative entre l'élément de changement de couleur particulier (Q) et l'éléments de changement de couleur de référence, caractérisé en ce qu'il comprend une mémoire d'adresses (3, 9) dans laquelle sont mémorisées uniquement les données des éléments de changement de couleur décodés et qui est capable de mémoriser les informations de position de tous les éléments de changement de couleur d'au moins deux lignes balayées l'une après l'autre, l'élément de changement de couleur de référence étant sélectionné à partir des informations décodées des éléments de changement de couleur, une addition/soustraction étant effectuée entre l'adresse de l'élément de changement de couleur de référence et la distance relative entre l'élément de changement de couleur de référence (P) et l'élément de changement de couleur particulier (Q), ce qui fournit l'information de position de l'élément de changement de couleur particulier (Q), information qui est introduite dans la mémoire d'adresses (3, 9).

2. Système selon la revendication 1, dans lequel la mémoire d'adresses (3) est du type "premier entré, premier sorti" (FIFO).

3. Système selon la revendication 1, dans lequel la mémoire d'adresses (9) est du type à accès sélectif (RAM).

Fig. 1

Fig. 2A (b) PREC.S.L. (a) CURR.S.L.

Fig. 2B (b) PREC.S.L. (a) CURR.S.L.

Fig. 2C (b) PREC.S.L. (a) CURR.S.L.

Fig. 2D (b) PREC.S.L. (a) CURR.S.L.

Fig. 2E (b) PREC.S.L. (a) CURR.S.L.

*Fig. 3*

## Fig. 4

| PREC.S.L. | | | | $R_1$ | $R_2$ | | $R_3$ | | $R_4$ | | $R_5$ | | $R_6$ | | | | | | | | $R_1$ | | $R_7$ | | $R_2$ | | | $R_8$ |
| CURR.S.L. | | | | $R_{18}$ | | | | | | | | | | | | | | | $R_{19}$ | | $P_X$ | | | | | | $Q$ | | |

## Fig. 5

| $M_1$ | $M_2$ | $M_3$ | $M_4$ | $M_5$ | $M_6$ | $M_7$ | $M_8$ | $M_9$ | $M_{10}$ | ----- | | | $M_m$ | $M_{m+1}$ |
|---|---|---|---|---|---|---|---|---|---|---|---|---|---|---|
| $AR_1$ | $AR_2$ | $AR_3$ | $AR_4$ | $AR_5$ | $AR_6$ | $AP_1$ | $AR_7$ | $AP_2$ | $AR_8$ | ----- | $AR_{18}$ | $AR_{19}$ | $AP_X$ | |

3

Q

# Fig. 6

ADDR (CURR.S.L.) → R A M → ADDR (PREC.S.L.)

9

MPX ~905

COMPR. — MAXIMUM ADDRESS → COMPR.

901

908    906    907

WRITING-IN ADDRESS COUNTER    S(CL)

902

S(CL)    READING-OUT ADDRESS COUNTER

S(WR)

S(RD)

## Fig. 7